Europäisches Patentamt

European Patent Office

Office européen des brevets

(11) Publication number: **0 428 306 A2**

# EUROPEAN PATENT APPLICATION

(21) Application number: **90312058.2**

(22) Date of filing: **02.11.90**

(51) Int. Cl.⁵: **C08J 5/04, C08J 11/06**

(30) Priority: **02.11.89 ZA 898337**
**27.12.89 ZA 899890**

(43) Date of publication of application:
**22.05.91 Bulletin 91/21**

(84) Designated Contracting States:
**AT BE CH DE DK ES FR GB GR IT LI LU NL SE**

(71) Applicant: **COURTAULDS AUTOMOTIVE PRODUCTS (SA) (PTY) LIMITED**
**57 Morton Road, Rossburgh**
**Durban, Natal(ZA)**

(72) Inventor: **Gower, Michael William**
**23 Sanderson Road, Cowies Hill**
**Durban, Natal(ZA)**

(74) Representative: **Heath, Peter William Murray**
**FRY HEATH & CO. St. Georges House 6**
**Yattendon Road**
**Horley Surrey RH6 7BS(GB)**

(54) Composite sheet.

(57) A composite sheet for particular use in the automobile industry includes reinforcing strands of waste thermoplastic material such as that derived from the textile industry which are softened in a dough moulding composition and the mass moulded to the desired shape with addition of fillers, release agents and the like.

## FIELD OF THE INVENTION

This invention relates to a composite sheet and in particular to a sheet formed from a thermosettable material, which is suitable for interior use in the automobile industry.

## BACKGROUND OF THE INVENTION

The manufacture of a laminar material is described in our co-pending patent application number 90/0622.

It is an object of the invention to provide a composite sheet of the type described therein which does not necessarily have to be adhered to a woven or non-woven sheet.

## THE INVENTION

According to the present invention a composite sheet includes reinforcing strands of a polymeric material bonded with a thermosetting polymeric material and/or resinous material

Preferably the strands of reinforcing material make up between 5% to 70% of the material of the sheet. The reinforcing material ideally comprises waste fibres resulting from trimming of material of various lengths, and are preferably of a thermoplastic material such as a polyester but it will be appreciated that nylon and other similar polymers are equally useful. The length of the strands should be chosen for maximum length consistent with the limits of moulding procedures.

The thermosetting polymer material preferably comprises a polyester resin such as a dough moulding composition (DMC). A polystyrene heat active catalyst may be added to the polyester. Additional materials may include one or more fillers and release agents/

According to a further aspect of the invention a method of forming a composite sheet comprises the steps of forming a dough or sheet with a fibrous reinforcing material and a thermosetting polymeric and/or resinous material and shaping dough or sheet to a desired form.

The method preferably includes the step of placing the dough in a press having a mould for forming the object.

It has been found that the sheet of the present invention may be made of the order of 1 mm thick whereas the sheets of the prior art using DMC's have been of the order of 2.8 mm. This, an important saving, can be effected and other advantages achieved by virtue of the reduced thickness.

In a preferred form of the invention, the reinforcing fibres and the DMC are heated to a temperature at which the fibres exhibit a degree of softening so that an excellent bond can be achieved. Such a temperature will of course, depend on the nature of the fibres but with a conventional polyester fibre the temperature may be between 150°C and 220°C.

The main advantage of using a polymeric reinforcing fibre is that the problem of abrasion is substantially reduced, in comparison with the use of glass fibre reinforcing.

The reinforcing fibres useful in the invention may be waste thermosetting fibres derived from the textile industry, which are normally disposed of to waste. Thus, the reinforcing material is of very little cost.

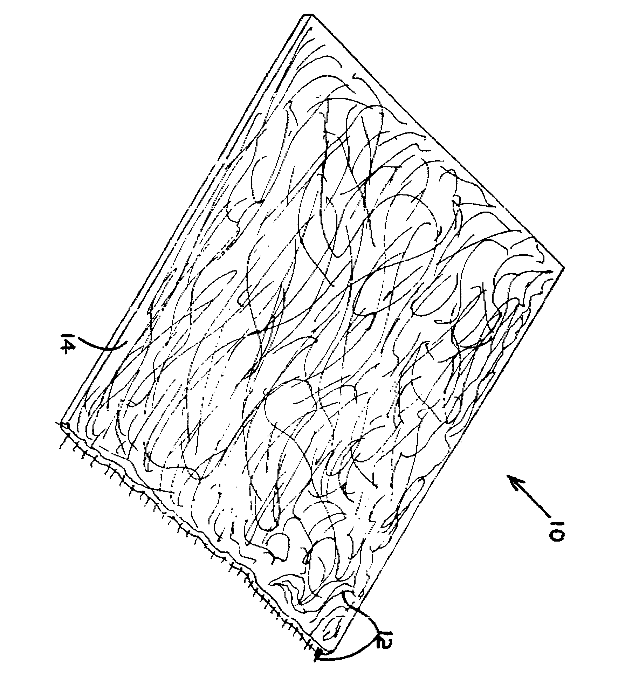

## BRIEF DESCRIPTION OF THE DRAWING

The drawing is an isometric view of a composite sheet according to an embodiment of the invention.

## DESCRIPTION OF THE PREFERRED EMBODIMENT

Referring to the drawing a composite sheet 10 includes chopped strands 12 of wast thermoplastic material from the textile industry, embedded in a DMC 14.

The strands 12 comprise 20% of the material of the sheet 10, the rest being made up of the DMC, polystyrene heat active catalyst and a filler and release agent.

The composite sheet can be formed in any desired shape and used in that form or laminated with a woven or non-woven sheet.

## Claims

1. A composite sheet including reinforcing strands of a polymeric material bonded with a thermosetting polymeric material.

2. The sheet according to claim 1 in which the thermosetting polymeric material is a dough moulding composition.

3. The sheet according to claim 1 or claim 2 in which the reinforcing strands are of a thermoplastic material.

4. The sheet according to claim 3 in which the reinforcing strands are waste fibres.

5. The sheet according to any of the above claims in which the reinforcing strands make up about 5% to 70% of the sheet.

6. The sheet according to any of the above claims in which the thermosetting material includes a polystyrene heat active catalyst.

7. A sheet according to any of the above claims which is of the order of 1 mm thick.

8. A sheet substantially as described with reference to the accompanying drawing.

9. A method of producing a composite sheet according to any of the above claims including the step of heating the reinforcing fibres and thermosetting material to a temperature at which the fibres exhibit a degree of softening and shaping the mass in a mould.

10. The method according to claim 9 in which the temperature is between 150°C and 220°C.